(19) Europäisches Patentamt
European Patent Office
Office européen des brevets

(11) **EP 4 607 396 A1**

(12) **EUROPEAN PATENT APPLICATION**

(43) Date of publication:
**27.08.2025 Bulletin 2025/35**

(21) Application number: **24187592.1**

(22) Date of filing: **10.07.2024**

(51) International Patent Classification (IPC):
**G06F 30/17** (2020.01)      **G06F 30/20** (2020.01)
**G06F 119/08** (2020.01)

(52) Cooperative Patent Classification (CPC):
**G06F 30/17; G06F 30/20; G06F 30/367;**
G06F 2119/08; Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.02.2024 CN 202410194522**

(71) Applicant: **Eve Power Co., Ltd.
Jingmen, Hubei 448000 (CN)**

(72) Inventors:
• **TAN, Yong**
 **Jingmen, Hubei, 448000 (CN)**
• **ZHOU, Shuping**
 **Jingmen, Hubei, 448000 (CN)**
• **FENG, Miaomiao**
 **Jingmen, Hubei, 448000 (CN)**
• **LIU, Ning**
 **Jingmen, Hubei (CN)**
• **HAN, Weizhen**
 **Jingmen, Hubei (CN)**

(74) Representative: **Herrero & Asociados, S.L.
Edificio Aqua - Agustín de Foxá, 4-10
28036 Madrid (ES)**

(54) **METHOD AND DEVICE FOR DETERMINING TAB PARAMETER OF BATTERY BASED ON ELECTROCHEMICAL SIMULATION MODEL**

(57)    A method and a device for determining a tab parameter of a battery based on an electrochemical simulation model. The method includes obtaining (101, 201) multiple to-be-simulated schemes; wherein the multiple to-be-simulated schemes all correspond to a battery structure, and a battery structure parameter is correspondingly configured for each to-be-simulated scheme; the battery structure parameter includes at least a tab width and/or a tab number; inputting (102) the battery structure parameter corresponding to each to-be-simulated scheme into the electrochemical simulation model with the battery structure pre-constructed for simulation, and obtaining (102) a simulation result of each to-be-simulated scheme; determining (103) an optimal simulation scheme from the multiple to-be-simulated schemes according to the simulation results of the multiple to-be-simulated schemes; and determining (104, 206) a tab parameter of the optimal simulation scheme as an optimal tab parameter of the battery structure.

FIG. 1

EP 4 607 396 A1

## Description

## TECHNICAL FIELD

The present disclosure relates to the technical field of batteries, and more specifically to a method and a device for determining a tab parameter of a battery based on an electrochemical simulation model.

## BACKGROUND

Under the background of carbon neutrality, new energy batteries have been developed rapidly. Currently, the market share of square aluminum-shell batteries reaches 90%, which brings about that the design of the square aluminum-shell batteries attracts much attention.

During the use of a square battery, heat loss directly determines the energy efficiency of the battery, and therefore, it is crucial to optimize the design of the battery structure to reduce the heat loss during the use of the battery in working conditions. For example, the parameter of a tab in the battery structure may be designed. However, the design of battery structures in related art is usually carried out by an orthogonal experimental method, which has factors that reduce the efficiency in determining the parameter of the tab in the battery structure, such as a large number of required schemes, high cost of sample preparation, and long cycle time of subsequent sample testing, such that the efficiency of the development of battery products is reduced. Therefore, it is particularly important to propose a technical solution to improve the efficiency in determining the parameter of the tab in the battery structure.

## SUMMARY OF THE DISCLOSURE

The present disclosure seeks to solve the problems of more schemes required for the design of battery tab parameters, high cost and expense of making samples, and long cycle time of subsequent sample testing, and to provide a method and device determining a tab parameter of a battery based on an electrochemical simulation model, for improving the efficiency of determining the tab parameter of the battery structure, which contributes to the improvement of the efficiency of the development of battery products.

In a first aspect, the present disclosure provides a method for determining a tab parameter of a battery based on an electrochemical simulation model, including:

obtaining a plurality of to-be-simulated schemes; wherein the plurality of to-be-simulated schemes all correspond to a battery structure, and a battery structure parameter is correspondingly configured for each of the plurality of to-be-simulated schemes; the battery structure parameter includes at least a tab width and/or a tab number;

inputting the battery structure parameter corresponding to each of the plurality of to-be-simulated schemes into the electrochemical simulation model with the battery structure pre-constructed for simulation, and obtaining a simulation result of each of the plurality of to-be-simulated schemes;

determining an optimal simulation scheme from the plurality of to-be-simulated schemes according to the simulation results of the plurality of to-be-simulated schemes; and

determining a tab parameter of the optimal simulation scheme as an optimal tab parameter of the battery structure.

In a second aspect, the present disclosure provides a device for determining a tab parameter of a battery based on an electrochemical simulation model, including:

an obtaining module, configured to obtain a plurality of to-be-simulated schemes; wherein the plurality of to-be-simulated schemes all correspond to a battery structure, and a battery structure parameter is correspondingly configured for each of the plurality of to-be-simulated schemes; the battery structure parameter includes at least a tab width and/or a tab number;

a simulation module, configured to input the battery structure parameter corresponding to each of the plurality of to-be-simulated schemes into the electrochemical simulation model with the battery structure pre-constructed for simulation, and obtaining a simulation result of each of the plurality of to-be-simulated schemes; and

a determination module, configured to determine an optimal simulation scheme from the plurality of to-be-simulated schemes according to the simulation results of the plurality of to-be-simulated schemes;

wherein the determination module is further configured to determine a tab parameter of the optimal simulation scheme as an optimal tab parameter of the battery structure.

In a third aspect, the present disclosure provides a device for determining a tab parameter of a battery based on an electrochemical simulation model, including:

a memory, storing an executable program code; and

a processor, coupled to the memory;

wherein the processor is configured to invoke the executable program code stored in the memory to perform the method as in the first aspect.

In a fourth aspect, the present disclosure provides a computer storage medium, storing computer instructions; wherein when the computer instructions are invoked, the computer instructions are configured to perform method as in the first aspect.

The present disclosure provides a method and a device for determining a tab parameter of a battery based on an electrochemical simulation model, the method including: obtaining a plurality of to-be-simulated schemes; wherein the plurality of to-be-simulated schemes all correspond to a battery structure, and a battery structure parameter is correspondingly configured for each of the plurality of to-be-simulated schemes; the battery structure parameter includes at least a tab width and/or a tab number; inputting the battery structure parameter corresponding to each of the plurality of to-be-simulated schemes into the electrochemical simulation model with the battery structure pre-constructed for simulation, and obtaining a simulation result of each of the plurality of to-be-simulated schemes; determining an optimal simulation scheme from the plurality of to-be-simulated schemes according to the simulation results of the plurality of to-be-simulated schemes; and determining a tab parameter of the optimal simulation scheme as an optimal tab parameter of the battery structure. As can be seen, the implementation of the method and the device proposed in the present disclosure may obtain multiple to-be-simulated schemes and input the battery structure parameter corresponding to each to-be-simulated scheme into the electrochemical simulation model with the pre-constructed battery structure for simulation, so as to obtain the simulation result of each to-be-simulated scheme, thereby improving the simulation efficiency and the simulation accuracy of each to-be-simulated scheme. Subsequently, based on the simulation results corresponding to all the to-be-simulated schemes, the optimal simulation scheme is determined from all the to-be-simulated schemes, which may improve the efficiency and accuracy of determining the optimal simulation scheme from all the to-be-simulated schemes based on the simulation results corresponding to all the to-be-simulated schemes. Then the tab parameter of the optimal simulation scheme is determined as the optimal battery structure, thereby improving the efficiency and accuracy of determining the optimal tab parameter of the battery structure based on the optimal simulation scheme, which is conducive to improving the development efficiency of the battery product based on the quickly determined tab parameter. Further, the way of quickly determining the optimal tab parameter through the electrochemical simulation model may simplify each of the to-be-simulated schemes and thus improve the simulation efficiency and accuracy of the simulation scheme for each simulation scheme to a certain extent, when compared to the way of the related art of adopting the orthogonal experimental method. In addition, the use of the electrochemical simulation model may reduce the sampling cost of the battery as well as improve the development efficiency of the battery product to a certain extent.

**BRIEF DESCRIPTION OF THE DRAWINGS**

FIG. 1 is a flowchart of a method for determining a tab parameter of a battery based on an electrochemical simulation model according to some embodiments of the present disclosure.

FIG. 2 is a flowchart of a method for determining a tab parameter of a battery based on an electrochemical simulation model according to other embodiments of the present disclosure.

FIG. 3 is a schematic diagram illustrating battery DC internal resistances in all to-be-simulated schemes and change rates of internal resistance therebetween, according to some embodiments of the present disclosure.

FIG. 4 is a graph of temperature rise data of all to-be-simulated schemes according to some embodiments of the present disclosure.

FIG. 5 is a graph of the SOC difference of all to-be-simulated schemes according to some embodiments of the present disclosure.

FIG. 6 is a structural schematic view of a device for determining a tab parameter of a battery based on an electrochemical simulation model according to some embodiments of the present disclosure.

FIG. 7 is a structural schematic view of a device for determining a tab parameter of a battery based on an electrochemical simulation model according to other embodiments of the present disclosure.

FIG. 8 is a structural schematic view of a device for determining a tab parameter of a battery based on an electrochemical simulation model according to further other embodiments of the present disclosure.

**DETAILED DESCRIPTION**

In the first aspect, in some embodiments, the determining an optimal simulation scheme from the plurality of to-be-simulated schemes according to the simulation results of the plurality of to-be-simulated schemes includes:

analyzing a performance parameter set in each of the plurality of to-be-simulated schemes of the battery structure according to the simulation result of each of the plurality of to-be-simulated schemes; wherein the performance parameter set includes one or more performance parameters;

comprehensively analyzing the performance parameter sets in the plurality of to-be-simulated schemes of the battery structure, and obtaining a comprehensive analysis result of the plurality of to-be-simulated schemes; and

selecting one of the plurality of to-be-simulated schemes of the battery structure, according to the comprehensive analysis result, as the optimal simulation scheme of the battery structure.

In the first aspect, in some embodiments, the simulation result includes simulated voltage data, and/or state of charge (SOC) data, and/or temperature field data; in response to the simulation result including the simulated voltage data, the simulation result further includes measured voltage data, and the measured voltage data is same for all the plurality of to-be-simulated schemes;

wherein the analyzing a performance parameter set in each of the plurality of to-be-simulated schemes of the battery structure according to the simulation result of each of the plurality of to-be-simulated schemes includes:
in response to the simulation result including the simulated voltage data, calculating and obtaining a battery direct current (DC) internal resistance of each of the plurality of to-be-simulated schemes according to the simulated voltage data and the measured voltage data corresponding to the each of the plurality of to-be-simulated schemes; and/or
in response to the simulation result including the SOC data, analyzing the SOC data corresponding to each of the plurality of to-be-simulated schemes, and obtaining SOC distribution of the each of the plurality of to-be-simulated schemes; and/or
in response to the simulation result including the temperature field data, analyzing the temperature field data corresponding to each of the plurality of to-be-simulated schemes, and obtaining temperature rise data of each of the plurality of to-be-simulated schemes;
wherein the performance parameter set includes the battery DC internal resistance, and/or the SOC distribution, and/or the temperature rise data.

In the first aspect, in some embodiments, the inputting the battery structure parameter corresponding to each of the plurality of to-be-simulated schemes into the electrochemical simulation model with the battery structure pre-constructed for simulation, and obtaining a simulation result of each of the plurality of to-be-simulated schemes include:

for each of the plurality of to-be-simulated schemes, inputting the battery structure parameter corresponding to the to-be-simulated scheme into the electrochemical simulation model with the battery structure pre-constructed, and performing a simulation to obtain a lithium ion concentration set in the to-be-simulated scheme of the battery structure; wherein the lithium ion concentration set of the battery structure includes a surface lithium ion concentration of coating particles of an electrode coating of the battery structure and an average lithium ion concentration of the coating particles; and

calculating and obtaining the SOC data corresponding to the to-be-simulated scheme according to the surface lithium ion concentration of the coating particles and the average lithium ion concentration of the coating particles in the to-be-simulated scheme, and determining the SOC data corresponding to the to-be-simulated scheme as the simulation result of the to-be-simulated scheme;
and/or
for each of the plurality of to-be-simulated schemes, inputting the battery structure parameter corresponding to the to-be-simulated scheme into the electrochemical simulation model with the battery structure pre-constructed, and performing a simulation to obtain a temperature calculation parameter of the to-be-simulated scheme; wherein the temperature calculation parameter includes a parameter required by a preset temperature field calculation formula; and
inputting the temperature calculation parameter of the to-be-simulated scheme into the preset temperature field calculation formula for calculation to obtain the temperature field data of the to-be-simulated scheme, and determining the temperature field data of the to-be-simulated scheme as the simulation result of the to-be-simulated scheme.

In the first aspect, in some embodiments, the comprehensive analysis result of the plurality of to-be-simulated schemes includes one or a combination of: a change rate of internal resistance of each of the plurality of to-be-simulated schemes, temperature rise data of each of the plurality of to-be-simulated schemes, and SOC distribution uniformity of each of the plurality of to-be-simulated schemes;

wherein the selecting one of the plurality of to-be-simulated schemes of the battery structure, according to the comprehensive analysis result, as the optimal simulation scheme of the battery structure includes:
in response to the comprehensive analysis result including the change rate of internal resistance, the temperature rise data, and the SOC distribution uniformity, selecting one of the plurality of to-be-simulated schemes of the battery structure satisfying: the change rate of internal resistance being greater than or equal to a preset change rate, the temperature rise data being less than or equal to a preset temperature rise data, and the SOC distribution uniformity meeting a preset distribution condition, and taking the one of the plurality of to-be-simulated schemes of the battery structure as the optimal simulation scheme of the battery structure.

In the first aspect, in some embodiments, the simulated voltage data includes a simulated voltage at each of plurality of simulation moments within a preset simulation time period, and the measured voltage data includes a measured voltage at each of plurality of test moments within a preset test time period;

wherein the method further includes:
generating a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes; and
performing a correction on the simulated voltage data corresponding to each of the plurality of to-be-simulated schemes according to the voltage correction factor for the each of the plurality of to-be-simulated schemes, and obtaining target simulated voltage data corresponding to the each of the plurality of to-be-simulated schemes.

In the first aspect, in some embodiments, the generating a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes includes:

establishing a first relationship curve in each of the plurality of to-be-simulated schemes of the battery structure according to all the measured voltages in the each of the plurality of to-be-simulated schemes of the battery structure; wherein the first relationship curve is configured to represent a measured voltage-moment correspondence;
establishing a second relationship curve in each of the plurality of to-be-simulated schemes of the battery structure according to all the simulated voltages corresponding to the each of the plurality of to-be-simulated schemes; wherein the second relationship curve is configured to represent a simulated voltage-moment correspondence; and
for each of the plurality of to-be-simulated schemes, generating the voltage correction factor for the to-be-simulated scheme according to the first relationship curve in the to-be-simulated scheme of the battery structure and the second relationship curve in the to-be-simulated scheme of the battery structure.

In the second aspect, in some embodiments, in the determining an optimal simulation scheme from the plurality of to-be-simulated schemes according to the simulation results of the plurality of to-be-simulated scheme, the determination module is specifically configured to perform:

analyzing a performance parameter set in each of the plurality of to-be-simulated schemes of the battery structure according to the simulation result of each of the plurality of to-be-simulated schemes; wherein the performance parameter set includes one or more performance parameters;
comprehensively analyzing the performance parameter sets in the plurality of to-be-simulated schemes of the battery structure, and obtaining a comprehensive analysis result of the plurality of to-be-simulated schemes; and
selecting one of the plurality of to-be-simulated schemes of the battery structure, according to the comprehensive analysis result, as the optimal simulation scheme of the battery structure.

In the second aspect, in some embodiments, the simulation result includes simulated voltage data, and/or state of charge (SOC) data, and/or temperature field data; in response to the simulation result including the simulated voltage data, the simulation result further includes measured voltage data, and the measured voltage data is same for all the plurality of to-be-simulated schemes;

wherein in the analyzing a performance parameter set in each of the plurality of to-be-simulated schemes of the battery structure according to the simulation result of each of the plurality of to-be-simulated schemes, the determination module is specifically configured to perform:
in response to the simulation result including the simulated voltage data, calculating and obtaining a battery direct current (DC) internal resistance of each of the plurality of to-be-simulated schemes according to the simulated voltage data and the measured voltage data corresponding to the each of the plurality of to-be-simulated schemes; and/or
in response to the simulation result including the SOC data, analyzing the SOC data corresponding to each of the plurality of to-be-simulated schemes, and obtaining SOC distribution of the each of the plurality of to-be-simulated schemes; and/or
in response to the simulation result including the temperature field data, analyzing the temperature field data corresponding to each of the plurality of to-be-simulated schemes, and obtaining temperature rise data of each of the plurality of to-be-simulated schemes;
wherein the performance parameter set includes the battery DC internal resistance, and/or the SOC distribution, and/or the temperature rise data.

In the second aspect, in some embodiments, in the inputting the battery structure parameter corresponding to each of the plurality of to-be-simulated schemes into the electrochemical simulation model with the battery structure pre-constructed for simulation, and obtaining a simulation result of each of the plurality of to-be-simulated schemes, the determination module is specifically configured to perform:

for each of the plurality of to-be-simulated schemes, inputting the battery structure parameter corresponding to the to-be-simulated scheme into the electrochemical simulation model with the battery structure pre-constructed, and performing a simulation to obtain a lithium ion concentration set in the to-be-simulated scheme of the battery structure; wherein the lithium ion concentration set of the battery structure includes a surface lithium ion concentration of coating particles of an electrode coating of the battery structure and an average lithium ion concentration of the coating particles; and calculating and obtaining the SOC data corresponding to the to-be-simulated scheme according to the surface lithium ion concentration of the coating particles and the average lithium ion concentration of the coating particles in the to-be-simulated scheme, and determining the SOC data corresponding to the to-be-simulated scheme as the simulation result of the to-be-simulated scheme;

and/or

for each of the plurality of to-be-simulated schemes, inputting the battery structure parameter corresponding to the to-be-simulated scheme into the electrochemical simulation model with the battery structure pre-constructed, and performing a simulation to obtain a temperature calculation parameter of the to-be-simulated scheme; wherein the temperature calculation parameter includes a parameter required by a preset temperature field calculation formula; and

inputting the temperature calculation parameter of the to-be-simulated scheme into the preset temperature field calculation formula for calculation to obtain the temperature field data of the to-be-simulated scheme, and determining the temperature field data of the to-be-simulated scheme as the simulation result of the to-be-simulated scheme.

In the second aspect, in some embodiments, the comprehensive analysis result of the plurality of to-be-simulated schemes includes one or a combination of: a change rate of internal resistance of each of the plurality of to-be-simulated schemes, temperature rise data of each of the plurality of to-be-simulated schemes, and SOC distribution uniformity of each of the plurality of to-be-simulated schemes;

wherein in the selecting one of the plurality of to-be-simulated schemes of the battery structure, according to the comprehensive analysis result, as the optimal simulation scheme of the battery structure, the determination module is specifically configured to perform:

in response to the comprehensive analysis result including the change rate of internal resistance, the temperature rise data, and the SOC distribution uniformity, selecting one of the plurality of to-be-simulated schemes of the battery structure satisfying: the change rate of internal resistance being greater than or equal to a preset change rate, the temperature rise data being less than or equal to a preset temperature rise data, and the SOC distribution uniformity meeting a preset distribution condition, and taking the one of the plurality of to-be-simulated schemes of the battery structure as the optimal simulation scheme of the battery structure.

In the second aspect, in some embodiments, the simulated voltage data includes a simulated voltage at each of plurality of simulation moments within a preset simulation time period, and the measured voltage data includes a measured voltage at each of plurality of test moments within a preset test time period;

wherein the device further includes:
a generation module, configured to generate a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes; and
a correction module, configured to perform a correction on the simulated voltage data corresponding to each of the plurality of to-be-simulated schemes according to the voltage correction factor for the each of the plurality of to-be-simulated schemes, and obtain target simulated voltage data corresponding to the each of the plurality of to-be-simulated schemes.

In the second aspect, in some embodiments, in the generating a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes, the generation module is specifically configured to perform:

establishing a first relationship curve in each of the plurality of to-be-simulated schemes of the battery structure according to all the measured voltages in the each of the plurality of to-be-simulated schemes of the battery structure; wherein the first relationship curve is configured to represent a measured voltage-moment correspondence;
establishing a second relationship curve in each of the plurality of to-be-simulated schemes of the battery structure according to all the simulated voltages corresponding to the each of the plurality of to-be-simulated schemes; wherein the second relationship curve is configured to represent a simulated voltage-moment correspondence; and

for each of the plurality of to-be-simulated schemes, generating the voltage correction factor for the to-be-simulated scheme according to the first relationship curve in the to-be-simulated scheme of the battery structure and the second relationship curve in the to-be-simulated scheme of the battery structure.

As can be seen, the implementation of the method and the device proposed in the present disclosure may obtain multiple to-be-simulated schemes and input the battery structure parameter corresponding to each to-be-simulated scheme into the electrochemical simulation model with the pre-constructed battery structure for simulation, so as to obtain the simulation result of each to-be-simulated scheme, thereby improving the simulation efficiency and the simulation accuracy of each to-be-simulated scheme. Subsequently, based on the simulation results corresponding to all the to-be-simulated schemes, the optimal simulation scheme is determined from all the to-be-simulated schemes, which may improve the efficiency and accuracy of determining the optimal simulation scheme from all the to-be-simulated schemes based on the simulation results corresponding to all the to-be-simulated schemes. Then the tab parameter of the optimal simulation scheme is determined as the optimal battery structure, thereby improving the efficiency and accuracy of determining the optimal tab parameter of the battery structure based on the optimal simulation scheme, which is conducive to improving the development efficiency of the battery product based on the quickly determined tab parameter. Further, the way of quickly determining the optimal tab parameter through the electrochemical simulation model may simplify each of the to-be-simulated schemes and thus improve the simulation efficiency and accuracy of the simulation scheme for each simulation scheme to a certain extent, when compared to the way of the related art of adopting the orthogonal experimental method. In addition, the use of the electrochemical simulation model may reduce the sampling cost of the battery as well as improve the development efficiency of the battery product to a certain extent. Detailed description is provided as followed.

Implementation I

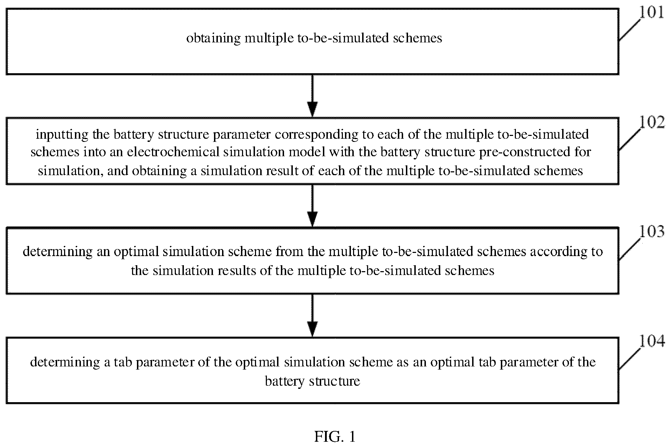

Referring to FIG. 1, FIG. 1 is a flowchart of a method for determining a tab parameter of a battery based on an electrochemical simulation model according to some embodiments of the present disclosure. The method depicted in FIG. 1 may be applied in a device for determining a tab parameter of a battery based on an electrochemical simulation model, where the device may include a determining apparatus or a determining server, and the determining server may include a cloud server or a local server, which is not limited herein. As shown in FIG. 1, the method may include the following operations at blocks illustrated herein.

At block 101: obtaining multiple to-be-simulated schemes.

In the embodiments of the present disclosure, all the to-be-simulated schemes correspond to a same battery structure. The battery structure may include a positive electrode collector, a positive electrode coating, a diaphragm, a negative electrode coating, a negative electrode collector, a positive tab, and a negative tab. A corresponding battery structure parameter is configured for each of the to-be-simulated schemes. The battery structure parameter includes at least a tab width and/or a tab number (i.e., the number of tabs). Specifically, all the to-be-simulated schemes may be schemes generated by configuring different battery structure parameters for the above-described battery structure. The battery structure parameter of each to-be-simulated scheme may be obtained by configurations from a simulator (e.g., a stuff for simulation operations) based on historical testing experience of battery samples, or may be obtained by a computer statistically based on historical testing experience of battery samples, which is not limited herein.

At block 102: inputting the battery structure parameter corresponding to each of the multiple to-be-simulated schemes into an electrochemical simulation model with the battery structure pre-constructed for simulation, and obtaining a simulation result of each of the multiple to-be-simulated schemes.

In the embodiments of the present disclosure, before the inputting the battery structure parameter corresponding to each of the multiple to-be-simulated schemes into an electrochemical simulation model with the battery structure pre-constructed for simulation, and obtaining a simulation result of each of the multiple to-be-simulated schemes, the method may further include: constructing a geometric model of the battery structure in a finite element drawing software, and inputting the geometric model of the battery structure into an initialized electrochemical simulation model for obtaining the electrochemical simulation model with the battery structure pre-constructed. In this way, the construction accuracy of the electrochemical simulation model containing the battery structure may be improved based on the geometric model of the battery structure, and the efficiency and speed of updating the electrochemical simulation model may be improved when the parameter of the battery structure is updated in a subsequent updating.

At block 103: determining an optimal simulation scheme from the multiple to-be-simulated schemes according to the simulation results of the multiple to-be-simulated schemes.

At block 104: determining a tab parameter of the optimal simulation scheme as an optimal tab parameter of the battery structure.

In the embodiments of the present disclosure, the optimal tab parameter includes an optimal tab width and/or an optimal tab number that can be taken and applied in the production of actual batteries corresponding to the battery structure.

As can be seen, the implementation of the method in FIG. 1 may obtain multiple to-be-simulated schemes and input the battery structure parameter corresponding to each to-be-simulated scheme into the electrochemical simulation model with the pre-constructed battery structure for simulation, so as to obtain the simulation result of each to-be-simulated scheme, thereby improving the simulation efficiency and the simulation accuracy of each to-be-simulated scheme. Subsequently, based on the simulation results corresponding to all the to-be-simulated schemes, the optimal simulation scheme is determined from all the to-be-simulated schemes, which may improve the efficiency and accuracy of determining the optimal simulation scheme from all the to-be-simulated schemes based on the simulation results corresponding to all the to-be-simulated schemes. Then the tab parameter of the optimal simulation scheme is determined as the optimal battery structure, thereby improving the efficiency and accuracy of determining the optimal tab parameter of the battery structure based on the optimal simulation scheme, which is conducive to improving the development efficiency of the battery product based on the quickly determined tab parameter. Further, the way of quickly determining the optimal tab parameter through the electrochemical simulation model may simplify each of the to-be-simulated schemes and thus improve the simulation efficiency and accuracy of the simulation scheme for each simulation scheme to a certain extent, when compared to the way of the related art of adopting the orthogonal experimental method. In addition, the use of the electrochemical simulation model may reduce the sampling cost of the battery as well as improve the development efficiency of the battery product to a certain extent.

Implementation II

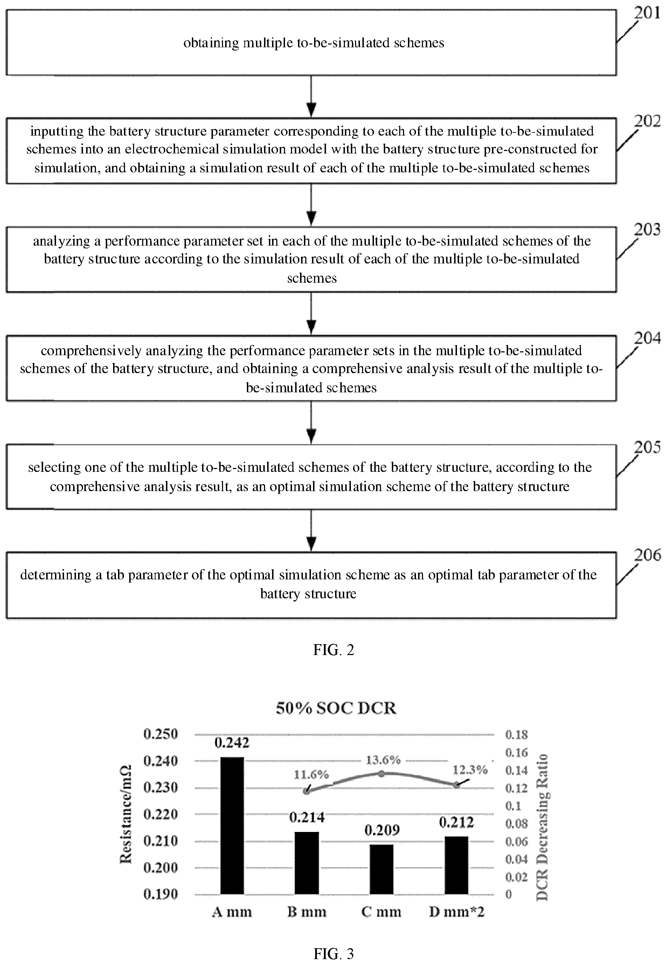

Referring to FIG. 2, FIG. 2 is a flowchart of a method for determining a tab parameter of a battery based on an electrochemical simulation model according to other embodiments of the present disclosure. The method depicted in FIG. 2 may be applied in a device for determining a tab parameter of a battery based on an electrochemical simulation model, where the device may include a determining apparatus or a determining server, and the determining server may include a cloud server or a local server, which is not limited herein. As shown in FIG. 2, the method may include the following operations at blocks illustrated herein.

At block 201: obtaining multiple to-be-simulated schemes.

At block 202: inputting the battery structure parameter corresponding to each of the multiple to-be-simulated schemes into an electrochemical simulation model with the battery structure pre-constructed for simulation, and obtaining a simulation result of each of the multiple to-be-simulated schemes.

In the embodiments of the present disclosure, the simulation result may include simulated voltage data, and/or SOC data, and/or temperature field data. When the simulation result includes simulated voltage data, the simulation result further includes measured voltage data. The measured voltage data is the same for all of the to-be-simulated schemes, i.e., the measured voltage data does not change with changes in the to-be-simulated schemes. The measured voltage data may be data of a static open-circuit voltage (OCV) obtained when a simulation of any of the to-be-simulated schemes is performed, or may be data obtained by measuring an actual battery sample corresponding to any of the to-be-simulated schemes. Specifically, in a case where the measured voltage data is obtained from the simulation of a certain to-be-simulated scheme, or where the measured voltage data is obtained from the actual battery sample corresponding to a certain to-be-simulated scheme, when the simulation is performed for remaining to-be-simulated schemes among all the to-be-simulated schemes except for the certain to-be-simulated scheme, since the measured voltage data is the same for all the to-be-simulated schemes, there is no need to simulate the measured voltage data of the remaining to-be-simulated schemes.

At block 203: analyzing a performance parameter set in each of the multiple to-be-simulated schemes of the battery structure according to the simulation result of each of the multiple to-be-simulated schemes.

In the embodiments of the present disclosure, the performance parameter set includes one or more performance parameters. Each performance parameter may be configured to represent a performance in the to-be-simulated scheme of the battery structure. The performance parameter set may include battery DC internal resistance, and/or SOC distribution, and/or temperature rise data. Specifically, when the simulation result corresponding to any of the to-be-simulated schemes include simulated voltage data, the performance parameter set in the to-be-simulated scheme of the battery structure includes battery DC internal resistance; when the simulation results corresponding to any of the to-be-simulated schemes include SOC data, the performance parameter set in the to-be-simulated scheme of the battery structure includes SOC distribution; when the simulation results corresponding to any of the to-be-simulated schemes include temperature field data, the performance parameter set in the to-be-simulated scheme of the battery structure includes temperature rise data, which is not limited herein.

At block 204: comprehensively analyzing the performance parameter sets in the multiple to-be-simulated schemes of the battery structure, and obtaining a comprehensive analysis result of the multiple to-be-simulated schemes.

In the embodiments of the present disclosure, the comprehensive analysis result of the to-be-simulated schemes may include one or a combination of change rate of internal resistance of each of the to-be-simulated schemes, temperature rise data of each of the to-be-simulated schemes, and the SOC distribution uniformity of each of the to-be-simulated schemes, which is not limited herein.

At block 205: selecting one of the multiple to-be-simulated schemes of the battery structure, according to the comprehensive analysis result, as an optimal simulation scheme of the battery structure.

At block 206: determining a tab parameter of the optimal simulation scheme as an optimal tab parameter of the battery structure.

For other descriptions of the embodiments of the present disclosure with respect to steps 201-steps 206, reference may be made to steps 101-step 104 in Implementation I, which is not limited herein.

As can be seen, the implementation of the method in FIG. 2 may obtain multiple to-be-simulated schemes and input the battery structure parameter corresponding to each to-be-simulated scheme into the electrochemical simulation model with the pre-constructed battery structure for simulation, so as to obtain the simulation result of each to-be-simulated scheme, thereby improving the simulation efficiency and the simulation accuracy of each to-be-simulated scheme. Subsequently, based on the simulation results corresponding to all the to-be-simulated schemes, the optimal simulation scheme is determined from all the to-be-simulated schemes, which may improve the efficiency and accuracy of determining the optimal simulation scheme from all the to-be-simulated schemes based on the simulation results corresponding to all the to-be-simulated schemes. Then the tab parameter of the optimal simulation scheme is determined as the optimal battery structure, thereby improving the efficiency and accuracy of determining the optimal tab parameter of the battery structure based on the optimal simulation scheme, which is conducive to improving the development efficiency of the battery product based on the quickly determined tab parameter. Further, the way of quickly determining the optimal tab parameter through the electrochemical simulation model may simplify each of the to-be-simulated schemes and thus improve the simulation efficiency and accuracy of the simulation scheme for each simulation scheme to a certain extent, when compared to the way of the related art of adopting the orthogonal experimental method. In addition, the use of the electrochemical simulation model may reduce the sampling cost of the battery as well as improve the development efficiency of the battery product to a certain extent. Moreover, the performance parameter set in each to-be-simulated scheme of the battery structure may be analyzed based on the simulation result corresponding to each to-be-simulated scheme, and thus it is possible to improve the analysis accuracy of the performance parameter set of each to-be-simulated scheme based on the simulation result corresponding to each to-be-simulated scheme. Subsequently, a comprehensive analysis of the accurately analyzed performance parameter sets of the battery structure in all the to-be-simulated schemes is carry out, which may improve the accuracy of the comprehensive analysis of the performance parameter sets of the to-be-simulated schemes. Then, according to the accurate comprehensive analysis result from the comprehensive analysis, one of all the to-be-simulated schemes of the battery structure is selected as the optimal simulation scheme of the battery structure, thereby improving the selection accuracy of the optimal simulation scheme.

In some embodiments, the step 203 of analyzing a performance parameter set in each of the multiple to-be-simulated schemes of the battery structure according to the simulation result of each of the multiple to-be-simulated schemes includes:

in response to the simulation result including simulated voltage data, calculating and obtaining a battery DC internal resistance of each of the multiple to-be-simulated schemes according to simulated voltage data and measured voltage data corresponding to the each of the multiple to-be-simulated schemes; and/or

in response to the simulation result including SOC data, analyzing the SOC data corresponding to each of the multiple to-be-simulated schemes, and obtaining SOC distribution of the each of the multiple to-be-simulated schemes; and/or

in response to the simulation result including temperature field data, analyzing the temperature field data corresponding to each of the multiple to-be-simulated schemes, and obtaining temperature rise data of each of the multiple to-be-simulated schemes.

In the embodiments of the present disclosure, a formula for calculating the battery DC internal resistance may be as follows:

$$DCR = \frac{U-V}{I};$$

where *DCR* is the battery DC internal resistance, *U* is the measured voltage data (i.e., the open circuit voltage of the battery), V is the simulated voltage data (i.e., the operating voltage of the battery), and I is the current.

As can be seen, in the above embodiments, when the simulation result includes the measured voltage data of the battery structure and the simulated voltage data in each to-be-simulated scheme of the battery structure, the battery DC internal resistance of the battery structure is calculated as the simulation result of the scheme according to the measured voltage data and the simulated voltage data in each to-be-simulated scheme of the battery structure, which improves the calculation accuracy of the battery DC internal resistance; and/or, when the simulation result includes SOC data of each scheme, the SOC data of each scheme is analyzed to obtain the SOC distribution as the simulation result of the scheme, which improves the analysis accuracy of the SOC distribution; and/or, when the simulation result includes temperature field data of each scheme, the temperature field data of each of each scheme is analyzed to obtain the temperature rise data as the simulation results of the scheme, which improves the analysis accuracy of the temperature rise data. By virtue of the above technical solution, it is further possible to improve the diversity and flexibility of each simulation result, as well as to favorably improve the richness of each simulation result.

In some embodiments, the step 202 of inputting the battery structure parameter corresponding to each of the multiple to-be-simulated schemes into an electrochemical simulation model with the battery structure pre-constructed for simulation, and obtaining a simulation result of each of the multiple to-be-simulated schemes includes:

for each of the multiple to-be-simulated schemes, inputting the battery structure parameter corresponding to the to-be-simulated scheme into the electrochemical simulation model with the battery structure pre-constructed, and performing a simulation to obtain a lithium ion concentration set in the to-be-simulated scheme of the battery structure; where the lithium ion concentration set of the battery structure includes a surface lithium ion concentration of coating particles of an electrode coating of the battery structure and an average lithium ion concentration of the coating particles; and
calculating and obtaining SOC data corresponding to the to-be-simulated scheme according to the surface lithium ion concentration of the coating particles and the average lithium ion concentration of the coating particles in the to-be-simulated scheme, and determining the SOC data corresponding to the to-be-simulated scheme as the simulation result of the to-be-simulated scheme;
and/or
for each of the multiple to-be-simulated schemes, inputting the battery structure parameter corresponding to the to-be-simulated scheme into the electrochemical simulation model with the battery structure pre-constructed, and performing a simulation to obtain a temperature calculation parameter of the to-be-simulated scheme; where the temperature calculation parameter includes a parameter required by a preset temperature field calculation formula; and
inputting the temperature calculation parameter of the to-be-simulated scheme into the preset temperature field calculation formula for calculation to obtain temperature field data of the to-be-simulated scheme, and determining the temperature field data of the to-be-simulated scheme as the simulation result of the to-be-simulated scheme.

In the embodiments of the present disclosure, the calculation formula of the SOC data (i.e., the state of charge) corresponding to each of the to-be-simulated schemes is specified as:

$$SOC = \frac{c_{s,surface}}{c_{s,average}};$$

where $c_{s,surface}$ is the surface lithium ion concentration of the coating particles in the corresponding to-be-simulated scheme, and $c_{s,average}$ is the average lithium ion concentration of the coating particles in the corresponding to-be-simulated scheme.

In some embodiments of the present disclosure, the temperature field calculation formula may include a temperature field formula based on the law of energy conservation. The temperature field calculation formula corresponding to each of the to-be-simulated schemes is specified as follows:

$$\rho C_p \frac{\partial T}{\partial t} = k_x \frac{\partial^2 T}{\partial x^2} + k_y \frac{\partial^2 T}{\partial y^2} + k_z \frac{\partial^2 T}{\partial z^2} + q;$$

where $\rho$ is the density, $C_p$ is the specific heat capacity, $T$ is the temperature field data, $k_x$ is the thermal conductivity in the $x$ direction, $k_y$ is the thermal conductivity in the $y$ direction, $k_z$ is the thermal conductivity in the z direction, and q is the heat production power.

In the above embodiments, the formula for the heat production power may include:

$$q = I\eta + IT \frac{dE_{eq}}{dT};$$

wherein $\eta$ is the polarization potential, and $E_{eq}$ is the electrode equilibrium potential.

As can be seen, in the above embodiments, the simulation result of each to-be-simulated scheme (the simulation result include simulated voltage data and/or SOC data and/or temperature field data) may be accurately calculated according to the abundant calculation formulas contained in the electrochemical simulation model with the pre-constructed battery structure, which is conducive to improving the diversity and flexibility of the simulation result of each to-be-simulated scheme as well as improving the richness of the simulation result of each of the to-be-simulated schemes based on the comprehensive calculation formulas.

In other embodiments, the step 205 of selecting one of the multiple to-be-simulated schemes of the battery structure, based on the comprehensive analysis result, as an optimal simulation scheme of the battery structure may include:
in response to the comprehensive analysis result including a change rate of internal resistance, temperature rise data, and SOC distribution uniformity, selecting one of the multiple to-be-simulated schemes of the battery structure satisfying: the change rate of internal resistance being greater than or equal to a preset change rate, the temperature rise data being less than or equal to a preset temperature rise data, and the SOC distribution uniformity meeting a preset distribution condition, and taking the one of the multiple to-be-simulated schemes of the battery structure as the optimal simulation scheme of the battery structure.

In some embodiments, when the comprehensive analysis result includes the change rate of internal resistance, one of the multiple to-be-simulated schemes of the battery structure satisfying the change rate of internal resistance being greater than or equal to the preset change rate is selected as the optimal simulation scheme of the battery structure; or, when the comprehensive analysis result includes the temperature rise data, one of the multiple to-be-simulated schemes of the battery structure satisfying the temperature rise data being less than or equal to the preset temperature rise data is selected as the optimal simulation scheme of the battery structure; or, when the comprehensive analysis result includes the SOC distribution uniformity, one of the multiple to-be-simulated schemes of the battery structure satisfying: the SOC distribution uniformity meeting the preset distribution conditions is selected as the optimal simulation scheme of the battery structure, thereby improving the diversity and flexibility of the selection of the optimal simulation scheme based on the diversity of the comprehensive analysis result.

In some embodiments, the temperature rise data of each of the to-be-simulated schemes may be configured to represent a temperature difference between a maximum temperature and a minimum temperature in the to-be-simulated schemes. In some embodiments, the preset distribution condition may be configured to represent a preset condition corresponding to whether the distribution of the SOC data of all the positive electrode coating particles is uniform. In some embodiments, the SOC distribution uniformity of each of the to-be-simulated schemes may be expressed by a SOC difference between maximum SOC data and minimum SOC data in the to-be-simulated schemes. Specifically, the SOC distribution uniformity satisfying the preset distribution condition is determined in the following manner: for each to-be-simulated scheme, determining whether the SOC difference of the to-be-simulated scheme is less than or equal to a preset SOC difference; determining that the SOC distribution uniformity of the to-be-simulated scheme meets the preset distribution condition in response to the SOC difference being less than or equal to the preset SOC difference; and determining that the SOC distribution uniformity of the to-be-simulated scheme does not meet the preset distribution condition in response to the SOC difference being greater than the preset SOC difference. This design may improve the accuracy of determining whether the SOC distribution uniformity of the to-be-simulated scheme meets the preset distribution condition.

In some embodiments, the preset change rate may be 12.5%, 13%, or any other value as set. In some embodiments, the preset temperature rise data may be 1°C, 0.8°C, or any other value as set. In some embodiments, the preset SOC difference may be 0.016, 0.0158, or any other value as set, which is not limited herein.

In some embodiments, a corresponding simulation order exists for each to-be-simulated scheme. In some embodiments, when each to-be-simulated scheme includes a tab width, all the to-be-simulated schemes may be arranged in accordance with the tab width from small to large, in which case there is a positive correlation between the change rate of internal resistance obtained and the tab width of the to-be-simulated scheme.

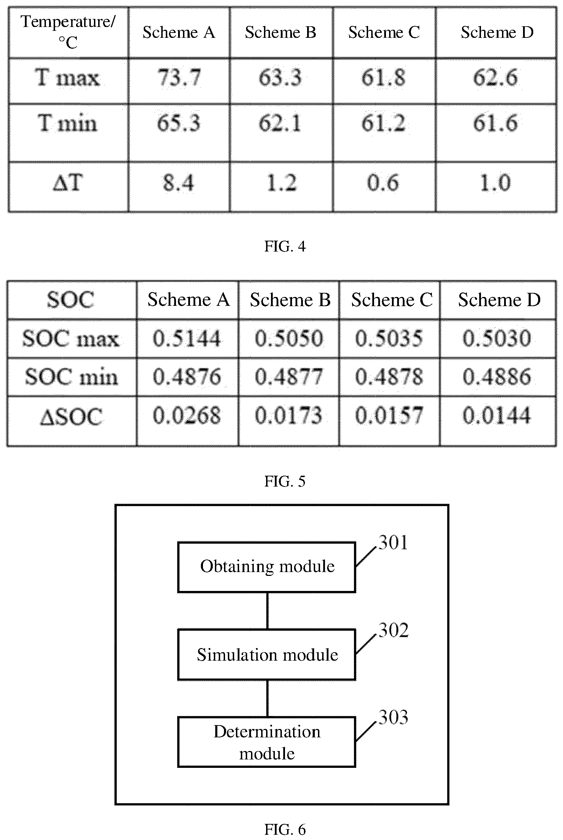

For example, assuming that there are a tab scheme A, a tab scheme B, a tab scheme C, and a tab scheme D, and that a tab scheme A includes a tab width a, a tab scheme B includes a tab width b, a tab scheme C includes a tab width c, and a tab scheme D includes two tab widths b, where the tab width a is less than the tab width b, and the tab width b is less than the tab width c, when the comprehensive analysis result includes only the change rate of internal resistance, as shown in FIG. 3, FIG. 3 is a schematic diagram illustrating battery DC internal resistances in all to-be-simulated schemes and change rates of internal resistance therebetween, according to some embodiments of the present disclosure. As seen, a first change rate of internal resistance (e.g., decreasing rate of internal resistance) between the tab scheme A and the tab scheme B is less than a second change rate of internal resistance between the tab scheme B and the tab scheme C; the second change rate of internal resistance between the tab scheme B and the tab scheme C is greater than a third change rate of internal resistance between the tab scheme C and the tab scheme D. That is, the change rate of internal resistance between the tab scheme B and the tab scheme C is the greatest, and thus the tab scheme C can be determined as the optimal tab scheme. When the comprehensive analysis result includes only the temperature rise data, as shown in FIG. 4, FIG. 4 is a graph of temperature rise data of all to-be-simulated schemes according to some embodiments of the present disclosure. As seen, the temperature rise data of the tab scheme C is the least, and thus the tab scheme C can be determined as the optimal tab scheme. When the comprehensive analysis result includes only the SOC distribution uniformity, as shown in FIG. 5, FIG. 5 is a graph of the SOC difference of all to-be-simulated schemes according to some embodiments of the present disclosure. As seen, the SOC difference of tab scheme C and the SOC difference of tab scheme D are both less than the preset SOC difference, and thus either tab scheme C or tab scheme D can be determined as the optimal tab scheme.

As can be seen, in the above embodiments, when the comprehensive analysis result includes the change rate of internal resistance, the temperature rise data, and the SOC distribution uniformity, one of the multiple to-be-simulated schemes of the battery structure satisfying: the change rate of internal resistance being greater than or equal to the preset change rate, the temperature rise data being less than or equal to the preset temperature rise data, and the SOC distribution uniformity meeting the preset distribution condition, can be selected as the optimal simulation scheme of the battery structure, thereby improving the accuracy and reliability of the selection of the optimal simulation scheme of the battery structure.

In further other embodiments, the simulated voltage data includes a simulated voltage at each of multiple simulation moments within a preset simulation time period, and the measured voltage data includes a measured voltage at each of multiple test moments within a preset test time period. The method may further include:

generating a voltage correction factor for each to-be-simulated scheme according to all the measured voltages in the to-be-simulated scheme of the battery structure and all the simulated voltages corresponding to the to-be-simulated scheme; and performing a correction on the simulated voltage data corresponding to each to-be-simulated scheme according to the voltage correction factor for the to-be-simulated scheme, and obtaining target simulated voltage data corresponding to each to-be-simulated scheme.

In the embodiments of the present disclosure, the corrected target simulated voltage data may be configured to recalculate the battery DC internal resistance, such that the calculated battery DC internal resistance is more accurate.

As can be seen, in the above embodiments, the voltage correction factor for each to-be-simulated scheme can be generated according to all the measured voltages in each to-be-simulated scheme of the battery structure and all the simulated voltages corresponding to each to-be-simulated scheme, which may improve the generation accuracy of each voltage correction factor. Then, according to the accurately calculated voltage correction factors, the simulated voltage data corresponding to each to-be-simulated scheme is corrected to obtain the target simulated voltage data corresponding to each to-be-simulated scheme, which may improve the correction accuracy of the target simulated voltage data corresponding to each to-be-simulated scheme.

In some optional embodiments, the generating a voltage correction factor for each to-be-simulated scheme according to all the measured voltages in the to-be-simulated scheme of the battery structure and all the simulated voltages corresponding to the to-be-simulated scheme may include:

establishing a first relationship curve in each to-be-simulated scheme of the battery structure according to all the measured voltages in the to-be-simulated scheme of the battery structure; establishing a second relationship curve in each to-be-simulated scheme of the battery structure according to all the simulated voltages corresponding to the to-be-simulated scheme; and for each to-be-simulated scheme, generating the voltage correction factor for the to-be-simulated scheme according to the first relationship curve in the to-be-simulated scheme of the battery structure and the second relationship curve in the to-be-simulated scheme of the battery structure.

In the embodiments of the present disclosure, the first relationship curve is configured to represent a measured voltage-moment correspondence, and the second relationship curve is configured to represent a simulated voltage-moment correspondence.

As can be seen, in the above embodiments, the first relationship curve in each to-be-simulated scheme of the battery structure can be established according to all the measured voltages in each to-be-simulated scheme of the battery structure, which may improve the establishment accuracy of the first relationship curve in each to-be-simulated scheme of the battery structure. In addition, the second relationship curve in each to-be-simulated scheme of the battery structure can be established according to all the simulated voltages corresponding to each to-be-simulated scheme, which may improve the establishment accuracy of the first relationship curve in each to-be-simulated scheme of the battery structure. Subsequently, the voltage correction factor for each to-be-simulated scheme can be generated according to the accurately established first relationship curve and second relationship curve for each to-be-simulated scheme, which may improve the accuracy and reliability of generating the voltage correction factor for each to-be-simulated scheme, thereby facilitating the improvement of the accuracy and reliability of the subsequent correction of the simulated voltage data according to the accurately generated voltage correction factor.

Implementation III

Referring to FIG. 6, FIG. 6 is a structural schematic view of a device for determining a tab parameter of a battery based on an electrochemical simulation model according to some embodiments of the present disclosure. The device depicted in FIG. 6 may include a determining apparatus or a determining server, where the determining server may include a cloud server or a local server, which is not limited herein. As shown in FIG. 6, the device may include:

an obtaining module 301, configured to obtain multiple to-be-simulated schemes; where all the to-be-simulated schemes correspond to a same battery structure, and a corresponding battery structure parameter is configured for each of the to-be-simulated schemes; the battery structure parameter includes at least a tab width and/or a tab number (i.e., the number of tabs);

a simulation module 302, configured to input the battery structure parameter corresponding to each of the multiple to-be-simulated schemes into an electrochemical simulation model with the battery structure pre-constructed for simulation, and obtain a simulation result of each of the multiple to-be-simulated schemes; and

a determination module 303, configured to determine an optimal simulation scheme from the multiple to-be-simulated schemes according to the simulation results of the multiple to-be-simulated schemes; where the determination module 303 is further configured to determine a tab parameter of the optimal simulation scheme as an optimal tab parameter of the battery structure.

As can be seen, the implementation of the device described in FIG. 6 may obtain multiple to-be-simulated schemes and input the battery structure parameter corresponding to each to-be-simulated scheme into the electrochemical simulation model with the pre-constructed battery structure for simulation, so as to obtain the simulation result of each to-be-simulated scheme, thereby improving the simulation efficiency and the simulation accuracy of each to-be-simulated scheme. Subsequently, based on the simulation results corresponding to all the to-be-simulated schemes, the optimal simulation scheme is determined from all the to-be-simulated schemes, which may improve the efficiency and accuracy of determining the optimal simulation scheme from all the to-be-simulated schemes based on the simulation results corresponding to all the to-be-simulated schemes. Then the tab parameter of the optimal simulation scheme is determined as the optimal battery structure, thereby improving the efficiency and accuracy of determining the optimal tab parameter of the battery structure based on the optimal simulation scheme, which is conducive to improving the development efficiency of the battery product based on the quickly determined tab parameter. Further, the way of quickly determining the optimal tab parameter through the electrochemical simulation model may simplify each of the to-be-simulated schemes and thus improve the simulation efficiency and accuracy of the simulation scheme for each simulation scheme to a certain extent, when compared to the way of the related art of adopting the orthogonal experimental method. In addition, the use of the electrochemical simulation model may reduce the sampling cost of the battery as well as improve the development efficiency of the battery product to a certain extent.

In some embodiments, in the determining an optimal simulation scheme from the multiple to-be-simulated schemes according to the simulation results of the multiple to-be-simulated schemes, the determination module 303 is specifically configured to:

analyze a performance parameter set in each of the multiple to-be-simulated schemes of the battery structure according to the simulation result of each of the multiple to-be-simulated schemes, where the performance parameter set includes one or more performance parameters;

comprehensively analyze the performance parameter sets in the multiple to-be-simulated schemes of the battery structure, and obtain a comprehensive analysis result of the multiple to-be-simulated schemes; and

select one of the multiple to-be-simulated schemes of the battery structure, according to the comprehensive analysis result, as an optimal simulation scheme of the battery structure.

As can be seen, in the above embodiments, the performance parameter set in each to-be-simulated scheme of the battery structure may be analyzed based on the simulation result corresponding to each to-be-simulated scheme, and thus it is possible to improve the analysis accuracy of the performance parameter set of each to-be-simulated scheme based on the simulation result corresponding to each to-be-simulated scheme. Subsequently, a comprehensive analysis of the accurately analyzed performance parameter sets of the battery structure in all the to-be-simulated schemes is carry out, which may improve the accuracy of the comprehensive analysis of the performance parameter sets of the to-be-simulated schemes. Then, according to the accurate comprehensive analysis result from the comprehensive analysis, one of all the to-be-simulated schemes of the battery structure is selected as the optimal simulation scheme of the battery structure, thereby improving the selection accuracy of the optimal simulation scheme.

In some embodiments, the simulation result may include simulated voltage data, and/or SOC data, and/or temperature field data. When the simulation result includes simulated voltage data, the simulation result further includes measured voltage data, and the measured voltage data is the same for all of the to-be-simulated schemes. In the analyzing a performance parameter set in each of the multiple to-be-simulated schemes of the battery structure according to the simulation result of each of the multiple to-be-simulated schemes, the determination module 303 is specifically configured to:

in response to the simulation result including the simulated voltage data, calculate and obtain a battery DC internal resistance of each of the multiple to-be-simulated schemes according to simulated voltage data and measured voltage data corresponding to the each of the multiple to-be-simulated schemes; and/or

in response to the simulation result including the SOC data, analyze the SOC data corresponding to each of the multiple to-be-simulated schemes, and obtain SOC distribution of the each of the multiple to-be-simulated schemes; and/or

in response to the simulation result including the temperature field data, analyze the temperature field data corresponding to each of the multiple to-be-simulated schemes, and obtain temperature rise data of each of the multiple to-be-simulated schemes;

where the performance parameter set includes a battery DC internal resistance, and/or SOC distribution, and/or temperature rise data.

As can be seen, in the above embodiments, when the simulation result includes the measured voltage data of the battery structure and the simulated voltage data in each to-be-simulated scheme of the battery structure, the battery DC internal resistance of the battery structure is calculated as the simulation result of the scheme according to the measured voltage data and the simulated voltage data in each to-be-simulated scheme of the battery structure, which improves the calculation accuracy of the battery DC internal resistance; and/or, when the simulation result includes SOC data of each scheme, the SOC data of each scheme is analyzed to obtain the SOC distribution as the simulation result of the scheme, which improves the analysis accuracy of the SOC distribution; and/or, when the simulation result includes temperature field data of each scheme, the temperature field data of each of each scheme is analyzed to obtain the temperature rise data as the simulation results of the scheme, which improves the analysis accuracy of the temperature rise data. By virtue of the above technical solution, it is further possible to improve the diversity and flexibility of each simulation result, as well as to favorably improve the richness of each simulation result.

In some embodiments, in the inputting the battery structure parameter corresponding to each of the multiple to-be-simulated schemes into an electrochemical simulation model with the battery structure pre-constructed for simulation, and obtaining a simulation result of each of the multiple to-be-simulated schemes, the simulation module 302 is specifically configured to:

for each of the multiple to-be-simulated schemes, input the battery structure parameter corresponding to the to-be-simulated scheme into the electrochemical simulation model with the battery structure pre-constructed, and perform a simulation to obtain a lithium ion concentration set in the to-be-simulated scheme of the battery structure; where the lithium ion concentration set of the battery structure includes a surface lithium ion concentration of coating particles of an electrode coating of the battery structure and an average lithium ion concentration of the coating particles; and

calculate and obtain SOC data corresponding to the to-be-simulated scheme according to the surface lithium ion concentration of the coating particles and the average lithium ion concentration of the coating particles in the to-be-simulated scheme, and determine the SOC data corresponding to the to-be-simulated scheme as the simulation result of the to-be-simulated scheme; and/or

for each of the multiple to-be-simulated schemes, input the battery structure parameter corresponding to the to-be-simulated scheme into the electrochemical simulation model with the battery structure pre-constructed, and perform a simulation to obtain a temperature calculation parameter of the to-be-simulated scheme; where the temperature calculation parameter includes a parameter required by a preset temperature field calculation formula; and

input the temperature calculation parameter of the to-be-simulated scheme into the preset temperature field calculation formula for calculation to obtain temperature field data of the to-be-simulated scheme, and determine the temperature field data of the to-be-simulated scheme as the simulation result of the to-be-simulated scheme.

As can be seen, in the above embodiments, the simulation result of each to-be-simulated scheme (the simulation result include simulated voltage data and/or SOC data and/or temperature field data) may be accurately calculated according to the abundant calculation formulas contained in the electrochemical simulation model with the pre-constructed battery structure, which is conducive to improving the diversity and flexibility of the simulation result of each to-be-simulated scheme as well as improving the richness of the simulation result of each of the to-be-simulated schemes based on the comprehensive calculation formulas.

In other embodiments, the comprehensive analysis result of the to-be-simulated schemes may include one or a combination of change rate of internal resistance of each of the to-be-simulated schemes, temperature rise data of each of the to-be-simulated schemes, and the SOC distribution uniformity of each of the to-be-simulated schemes. In the selecting one of the multiple to-be-simulated schemes of the battery structure, based on the comprehensive analysis result, as an optimal simulation scheme of the battery structure, the determination module 303 is specifically configured to:

in response to the comprehensive analysis result including a change rate of internal resistance, temperature rise data, and SOC distribution uniformity, select one of the multiple to-be-simulated schemes of the battery structure satisfying: the change rate of internal resistance being greater than or equal to a preset change rate, the temperature rise data being less than or equal to a preset temperature rise data, and the SOC distribution uniformity meeting a preset distribution condition, and take the one of the multiple to-be-simulated schemes of the battery structure as the optimal simulation scheme of the battery structure.

As can be seen, in the above embodiments, when the comprehensive analysis result includes the change rate of internal resistance, the temperature rise data, and the SOC distribution uniformity, one of the multiple to-be-simulated schemes of the battery structure satisfying: the change rate of internal resistance being greater than or equal to the preset change rate, the temperature rise data being less than or equal to the preset temperature rise data, and the SOC distribution uniformity meeting the preset distribution condition, can be selected as the optimal simulation scheme of the battery structure, thereby improving the accuracy and reliability of the selection of the optimal simulation scheme of the battery structure.

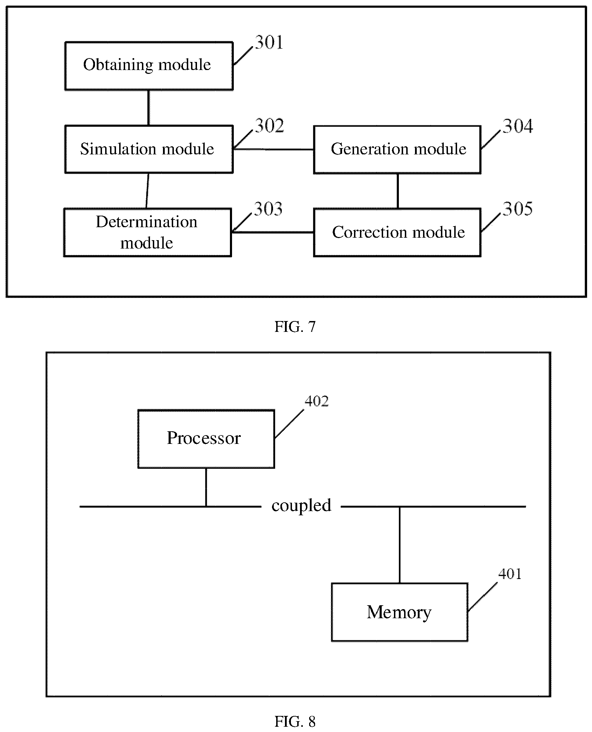

In some embodiments, the simulated voltage data includes a simulated voltage at each of multiple simulation moments within a preset simulation time period, and the measured voltage data includes a measured voltage at each of multiple test moments within a preset test time period. As shown in FIG. 7, FIG. 7 is a structural schematic view of a device for determining a tab parameter of a battery based on an electrochemical simulation model according to other embodiments of the present disclosure, the device may further include:

a generation module 304, configured to generate a voltage correction factor for each to-be-simulated scheme according to all the measured voltages in the to-be-simulated scheme of the battery structure and all the simulated voltages corresponding to the to-be-simulated scheme; and
a correction module 305, configured to perform a correction on the simulated voltage data corresponding to each to-be-simulated scheme according to the voltage correction factor for the to-be-simulated scheme, and obtaining target simulated voltage data corresponding to each to-be-simulated scheme.

As can be seen, in the above embodiments, the voltage correction factor for each to-be-simulated scheme can be generated according to all the measured voltages in each to-be-simulated scheme of the battery structure and all the simulated voltages corresponding to each to-be-simulated scheme, which may improve the generation accuracy of each voltage correction factor. Then, according to the accurately calculated voltage correction factors, the simulated voltage data corresponding to each to-be-simulated scheme is corrected to obtain the target simulated voltage data corresponding to each to-be-simulated scheme, which may improve the correction accuracy of the target simulated voltage data corresponding to each to-be-simulated scheme.

In some embodiments, in the generating a voltage correction factor for each to-be-simulated scheme according to all the measured voltages in the to-be-simulated scheme of the battery structure and all the simulated voltages corresponding to the to-be-simulated scheme, the generator module 304 is specifically configured to:

establish a first relationship curve in each to-be-simulated scheme of the battery structure according to all the measured voltages in the to-be-simulated scheme of the battery structure; where the first relationship curve is configured to represent a measured voltage-moment correspondence;
establish a second relationship curve in each to-be-simulated scheme of the battery structure according to all the simulated voltages corresponding to the to-be-simulated scheme; where the second relationship curve is configured to represent a simulated voltage-moment correspondence; and
for each to-be-simulated scheme, generate the voltage correction factor for the to-be-simulated scheme according to the first relationship curve in the to-be-simulated scheme of the battery structure and the second relationship curve in the to-be-simulated scheme of the battery structure.

As can be seen, in the above embodiments, the first relationship curve in each to-be-simulated scheme of the battery structure can be established according to all the measured voltages in each to-be-simulated scheme of the battery structure, which may improve the establishment accuracy of the first relationship curve in each to-be-simulated scheme of the battery structure. In addition, the second relationship curve in each to-be-simulated scheme of the battery structure can be established according to all the simulated voltages corresponding to each to-be-simulated scheme, which may improve the establishment accuracy of the first relationship curve in each to-be-simulated scheme of the battery structure. Subsequently, the voltage correction factor for each to-be-simulated scheme can be generated according to the accurately established first relationship curve and second relationship curve for each to-be-simulated scheme, which may improve the accuracy and reliability of generating the voltage correction factor for each to-be-simulated scheme, thereby facilitating the improvement of the accuracy and reliability of the subsequent correction of the simulated voltage data according to the accurately generated voltage correction factor.

Implementation IV

Referring to FIG. 8, FIG. 8 is a structural schematic view of a device for determining a tab parameter of a battery based on an electrochemical simulation model according to further other embodiments of the present disclosure. As shown in FIG. 8, the device may include:

> a memory 401, storing an executable program code; and
> a processor 402, coupled to the memory 401;
> where the processor 402 is configured to invoke the executable program code stored in the memory 401 to perform the steps in the method for determining a tab parameter of a battery based on an electrochemical simulation model described in Implementation I or Implementation II of the present disclosure.

Implementation V

The embodiments of the present disclosure further disclose a computer storage medium, the computer storage medium storing computer instructions which, when invoked, are configured to perform the steps in the method for determining a tab parameter of a battery based on an electrochemical simulation model described in Implementation I or Implementation II of the present disclosure.

Implementation six

The embodiments of the present disclosure further disclose a computer program product including a non-transitory computer-readable storage medium storing a computer program, and the computer program is operable to cause the computer to perform the steps in the method for determining a tab parameter of a battery based on an electrochemical simulation model described in Implementation I or Implementation II of the present disclosure.

The above-described device embodiments are only schematic, where modules described as separate components may or may not be physically separated, and the components shown as modules may or may not be physical modules, i.e., they may be located in a single place or may be distributed over multiple network modules. Some or all of the modules may be selected to fulfill the purpose of the embodiments according to actual needs. The above can be understood and implemented by those skilled in the art without creative labor.

Through the specific description of the above embodiments, those skilled in the art can clearly understand that the various embodiments can be realized by means of software with necessary general hardware platform, and of course, by means of hardware. Based on this understanding, the above technical solutions essentially or contribute to the related art part can be embodied in the form of software products, and the computer software products can be stored in a computer-readable storage medium, the storage medium including Read-Only Memory (ROM), Random Access Memory (RAM), Programmable Read-Only Memory (PROM), Erasable Programmable Read-Only Memory (EPROM), One-time Programmable Read-Only Memory (OTPROM), Electrically-Erasable Programmable Read-Only Memory (EEPROM), Compact Disc Read-Only Memory (CD-ROM), other optical disk memory, magnetic disk memory, magnetic tape memory, or any other computer-readable medium capable of carrying or storing data.

## Claims

1. A method for determining a tab parameter of a battery based on an electrochemical simulation model, **characterized by** comprising:

> obtaining (101, 201) a plurality of to-be-simulated schemes; wherein the plurality of to-be-simulated schemes all correspond to a battery structure, and a battery structure parameter is correspondingly configured for each of the plurality of to-be-simulated schemes; the battery structure parameter comprises at least a tab width and/or a tab number;
> inputting (102) the battery structure parameter corresponding to each of the plurality of to-be-simulated schemes into the electrochemical simulation model with the battery structure pre-constructed for simulation, and obtaining (102) a simulation result of each of the plurality of to-be-simulated schemes;
> determining (103) an optimal simulation scheme from the plurality of to-be-simulated schemes according to the simulation results of the plurality of to-be-simulated schemes; and
> determining (104, 206) a tab parameter of the optimal simulation scheme as an optimal tab parameter of the battery structure.

2. The method according to claim 1, wherein the determining (103) an optimal simulation scheme from the plurality of to-be-simulated schemes according to the simulation results of the plurality of to-be-simulated schemes comprises:

> analyzing (203) a performance parameter set in each of the plurality of to-be-simulated schemes of the battery structure according to the simulation result of each of the plurality of to-be-simulated schemes; wherein the performance parameter set comprises one or more performance parameters;
> comprehensively analyzing (204) the performance parameter sets in the plurality of to-be-simulated schemes of the battery structure, and obtaining (204) a comprehensive analysis result of the plurality of to-be-simulated schemes; and
> selecting (205) one of the plurality of to-be-simulated schemes of the battery structure, according to the comprehensive analysis result, as the optimal simulation scheme of the battery structure.

3. The method according to claim 2, wherein the simulation result comprises simulated voltage data, and/or state of charge, SOC, data, and/or temperature field data; in response to the simulation result comprising the simulated voltage data, the simulation result further comprises measured voltage data, and the measured voltage data is same for all the plurality of to-be-simulated schemes;

wherein the analyzing (203) a performance parameter set in each of the plurality of to-be-simulated schemes of the battery structure according to the simulation result of each of the plurality of to-be-simulated schemes comprises:

in response to the simulation result comprising the simulated voltage data, calculating and obtaining a battery direct current, DC, internal resistance of each of the plurality of to-be-simulated schemes according to the simulated voltage data and the measured voltage data corresponding to the each of the plurality of to-be-simulated schemes; and/or

in response to the simulation result comprising the SOC data, analyzing the SOC data corresponding to each of the plurality of to-be-simulated schemes, and obtaining SOC distribution of the each of the plurality of to-be-simulated schemes; and/or

in response to the simulation result comprising the temperature field data, analyzing the temperature field data corresponding to each of the plurality of to-be-simulated schemes, and obtaining temperature rise data of each of the plurality of to-be-simulated schemes;

wherein the performance parameter set comprises the battery DC internal resistance, and/or the SOC distribution, and/or the temperature rise data.

4. The method according to claim 3, wherein the inputting (102) the battery structure parameter corresponding to each of the plurality of to-be-simulated schemes into the electrochemical simulation model with the battery structure pre-constructed for simulation, and obtaining (102) a simulation result of each of the plurality of to-be-simulated schemes comprise:

for each of the plurality of to-be-simulated schemes, inputting the battery structure parameter corresponding to the to-be-simulated scheme into the electrochemical simulation model with the battery structure pre-constructed, and performing a simulation to obtain a lithium ion concentration set in the to-be-simulated scheme of the battery structure; wherein the lithium ion concentration set of the battery structure comprises a surface lithium ion concentration of coating particles of an electrode coating of the battery structure and an average lithium ion concentration of the coating particles; and

calculating and obtaining the SOC data corresponding to the to-be-simulated scheme according to the surface lithium ion concentration of the coating particles and the average lithium ion concentration of the coating particles in the to-be-simulated scheme, and determining the SOC data corresponding to the to-be-simulated scheme as the simulation result of the to-be-simulated scheme.

5. The method according to claim 3, wherein the inputting (102) the battery structure parameter corresponding to each of the plurality of to-be-simulated schemes into the electrochemical simulation model with the battery structure pre-constructed for simulation, and obtaining (102) a simulation result of each of the plurality of to-be-simulated schemes comprise:

for each of the plurality of to-be-simulated schemes, inputting the battery structure parameter corresponding to the to-be-simulated scheme into the electrochemical simulation model with the battery structure pre-constructed, and performing a simulation to obtain a temperature calculation parameter of the to-be-simulated scheme; wherein the temperature calculation parameter comprises a parameter required by a preset temperature field calculation formula; and

inputting the temperature calculation parameter of the to-be-simulated scheme into the preset temperature field calculation formula for calculation to obtain the temperature field data of the to-be-simulated scheme, and determining the temperature field data of the to-be-simulated scheme as the simulation result of the to-be-simulated scheme.

6. The method according to any one of claims 2-5, wherein the comprehensive analysis result of the plurality of to-be-simulated schemes comprises one or a combination of: a change rate of internal resistance of each of the plurality of to-be-simulated schemes, temperature rise data of each of the plurality of to-be-simulated schemes, and SOC distribution uniformity of each of the plurality of to-be-simulated schemes;

wherein the selecting (205) one of the plurality of to-be-simulated schemes of the battery structure, according to the comprehensive analysis result, as the optimal simulation scheme of the battery structure comprises:

in response to the comprehensive analysis result comprising the change rate of internal resistance, the temperature rise data, and the SOC distribution uniformity, selecting one of the plurality of to-be-simulated schemes of the battery structure satisfying: the change rate of internal resistance being greater than or equal to a preset change rate, the temperature rise data being less than or equal to a preset temperature rise data, and the SOC distribution uniformity meeting a preset distribution condition, and taking the one of the plurality of to-be-simulated schemes of the battery structure as the optimal simulation scheme of the battery structure.

7. The method according to any one of claims 3-5, wherein the simulated voltage data comprises a simulated voltage at each of plurality of simulation moments within a preset simulation time period, and the measured voltage data comprises a measured voltage at each of plurality of test moments within a preset test time period;
wherein the method further comprises:

generating a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes; and
performing a correction on the simulated voltage data corresponding to each of the plurality of to-be-simulated schemes according to the voltage correction factor for the each of the plurality of to-be-simulated schemes, and obtaining target simulated voltage data corresponding to the each of the plurality of to-be-simulated schemes.

8. The method according to claim 7, wherein the generating a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes comprises:

establishing a first relationship curve in each of the plurality of to-be-simulated schemes of the battery structure according to all the measured voltages in the each of the plurality of to-be-simulated schemes of the battery structure; wherein the first relationship curve is configured to represent a measured voltage-moment correspondence;

establishing a second relationship curve in each of the plurality of to-be-simulated schemes of the battery structure according to all the simulated voltages corresponding to the each of the plurality of to-be-simulated schemes; wherein the second relationship curve is configured to represent a simulated voltage-moment correspondence; and
for each of the plurality of to-be-simulated schemes, generating the voltage correction factor for the to-be-simulated scheme according to the first relationship curve in the to-be-simulated scheme of the battery structure and the second relationship curve in the to-be-simulated scheme of the battery structure.

9. A device for determining a tab parameter of a battery based on an electrochemical simulation model, **characterized by** comprising:

an obtaining module (301), configured to obtain a plurality of to-be-simulated schemes; wherein the plurality of to-be-simulated schemes all correspond to a battery structure, and a battery structure parameter is correspondingly configured for each of the plurality of to-be-simulated schemes; the battery structure parameter comprises at least a tab width and/or a tab number;
a simulation module (302), configured to input the battery structure parameter corresponding to each of the plurality of to-be-simulated schemes into the electrochemical simulation model with the battery structure pre-constructed for simulation, and obtaining a simulation result of each of the plurality of to-be-simulated schemes; and
a determination module (303), configured to determine an optimal simulation scheme from the plurality of to-be-simulated schemes according to the simulation results of the plurality of to-be-simulated schemes;
wherein the determination module (303) is further configured to determine a tab parameter of the optimal simulation scheme as an optimal tab parameter of the battery structure.

10. The device according to claim 9, wherein the simulated voltage data comprises a simulated voltage at each of plurality of simulation moments within a preset simulation time period, and the measured voltage data comprises a measured voltage at each of plurality of test moments within a preset test time period;
wherein the device further comprises:

a generation module (304), configured to generate a voltage correction factor for each of the plurality of to-be-simulated schemes according to all the measured voltages in the each of the plurality of to-be-simulated schemes of the battery structure and all the simulated voltages corresponding to the each of the plurality of to-be-simulated schemes; and
a correction module (305), configured to perform a correction on the simulated voltage data corresponding to each of the plurality of to-be-simulated schemes according to the voltage correction factor for the each of the plurality of to-be-simulated schemes, and obtain target simulated voltage data corresponding to the each of the plurality of to-be-simulated schemes.

11. The device according to claim 9, wherein in the determining an optimal simulation scheme from the plurality of to-be-simulated schemes according to the simulation results of the plurality of to-be-simulated schemes, the determination module (303) is specifically configured to:

analyze a performance parameter set in each of the plurality of to-be-simulated schemes of the battery structure according to the simulation result of each of the plurality of to-be-simulated schemes; wherein the performance parameter set comprises one or more performance parameters;
comprehensively analyze the performance parameter sets in the plurality of to-be-simulated schemes of the battery structure, and obtain a comprehensive analysis result of the plurality of to-be-simulated schemes; and
select one of the plurality of to-be-simulated schemes of the battery structure, according to the comprehensive analysis result, as the optimal simulation scheme of the battery structure.

12. The device according to claim 11, wherein the simulation result comprises simulated voltage data, and/or state of charge, SOC, data, and/or temperature field data; in response to the simulation result comprising the simulated voltage data, the simulation result further comprises measured voltage data, and the measured voltage data is same for all the plurality of to-be-simulated schemes;
wherein in the analyzing a performance parameter set in each of the plurality of to-be-simulated schemes of the battery structure according to the simulation result of each of the plurality of to-be-simulated schemes, the determination module (303) is specifically configured to:

in response to the simulation result comprising the simulated voltage data, calculate and obtain a battery direct current, DC, internal resistance of each of the plurality of to-be-simulated schemes according to the simulated voltage data and the measured voltage data corresponding to the each of the plurality of to-be-simulated schemes; and/or
in response to the simulation result comprising the SOC data, analyze the SOC data corresponding to each of the plurality of to-be-simulated schemes, and obtain SOC distribution of the each of the plurality of to-be-simulated schemes; and/or
in response to the simulation result comprising the temperature field data, analyze the temperature field data corresponding to each of the plurality of to-be-simulated schemes, and obtain temperature rise data of each of the plurality of to-be-simulated schemes;
wherein the performance parameter set comprises the battery DC internal resistance, and/or the SOC distribution, and/or the temperature rise data.

13. The method according to claim 12, wherein in the inputting the battery structure parameter corresponding to each of the plurality of to-be-simulated schemes into the electrochemical simulation model with the battery structure pre-constructed for simulation, and obtaining a simulation result of each of the plurality of to-be-simulated schemes, the simulation module (302) is specifically configured to:

for each of the plurality of to-be-simulated schemes, input the battery structure parameter corresponding to the to-be-simulated scheme into the electrochemical simulation model with the battery structure pre-constructed, and perform a simulation to obtain a lithium ion concentration set in the to-be-simulated scheme of the battery structure; wherein the lithium ion concentration set of the battery structure comprises a surface lithium ion concentration of coating particles of an electrode coating of the battery structure and an average lithium ion concentration of the coating particles; and
calculate and obtain the SOC data corresponding to the to-be-simulated scheme according to the surface lithium ion concentration of the coating particles and the average lithium ion concentration of the coating particles in the to-be-simulated scheme, and determine the SOC data corresponding to the to-be-simulated scheme as the simulation result of the to-be-simulated scheme; and/or
for each of the plurality of to-be-simulated schemes, input the battery structure parameter corresponding to the to-be-simulated scheme into the electrochemical simulation model with the battery structure pre-constructed, and perform a simulation to obtain a temperature calculation parameter of the to-be-simulated scheme;

wherein the temperature calculation parameter comprises a parameter required by a preset temperature field calculation formula; and input the temperature calculation parameter of the to-be-simulated scheme into the preset temperature field calculation formula for calculation to obtain the temperature field data of the to-be-simulated scheme, and determine the temperature field data of the to-be-simulated scheme as the simulation result of the to-be-simulated scheme.

14. A device for determining a tab parameter of a battery based on an electrochemical simulation model, comprising:

   a memory (401), storing an executable program code; and
   a processor (402), coupled to the memory; wherein the processor (402) is configured to invoke the executable program code stored in the memory (401) to perform the method according to any one of claims 1-8.

15. A computer storage medium, storing computer instructions; wherein when the computer instructions are invoked, the computer instructions are configured to perform the method according to any one of claims 1-8.

obtaining multiple to-be-simulated schemes _101_

inputting the battery structure parameter corresponding to each of the multiple to-be-simulated schemes into an electrochemical simulation model with the battery structure pre-constructed for simulation, and obtaining a simulation result of each of the multiple to-be-simulated schemes _102_

determining an optimal simulation scheme from the multiple to-be-simulated schemes according to the simulation results of the multiple to-be-simulated schemes _103_

determining a tab parameter of the optimal simulation scheme as an optimal tab parameter of the battery structure _104_

FIG. 1

```
┌─────────────────────────────────────────────────────────────────────┐
│                                                                       │ 201
│              obtaining multiple to-be-simulated schemes               │
│                                                                       │
└─────────────────────────────────────────────────────────────────────┘
                                    │
                                    ▼
┌─────────────────────────────────────────────────────────────────────┐
│   inputting the battery structure parameter corresponding to each     │ 202
│   of the multiple to-be-simulated schemes into an electrochemical     │
│   simulation model with the battery structure pre-constructed for     │
│   simulation, and obtaining a simulation result of each of the        │
│   multiple to-be-simulated schemes                                    │
└─────────────────────────────────────────────────────────────────────┘
                                    │
                                    ▼
┌─────────────────────────────────────────────────────────────────────┐
│   analyzing a performance parameter set in each of the multiple       │ 203
│   to-be-simulated schemes of the battery structure according to       │
│   the simulation result of each of the multiple to-be-simulated       │
│   schemes                                                             │
└─────────────────────────────────────────────────────────────────────┘
                                    │
                                    ▼
┌─────────────────────────────────────────────────────────────────────┐
│   comprehensively analyzing the performance parameter sets in the     │ 204
│   multiple to-be-simulated schemes of the battery structure, and      │
│   obtaining a comprehensive analysis result of the multiple to-       │
│   be-simulated schemes                                                │
└─────────────────────────────────────────────────────────────────────┘
                                    │
                                    ▼
┌─────────────────────────────────────────────────────────────────────┐
│   selecting one of the multiple to-be-simulated schemes of the        │ 205
│   battery structure, according to the comprehensive analysis          │
│   result, as an optimal simulation scheme of the battery structure    │
└─────────────────────────────────────────────────────────────────────┘
                                    │
                                    ▼
┌─────────────────────────────────────────────────────────────────────┐
│   determining a tab parameter of the optimal simulation scheme as     │ 206
│   an optimal tab parameter of the battery structure                   │
└─────────────────────────────────────────────────────────────────────┘
```

FIG. 2

**50% SOC DCR**

FIG. 3

| Temperature/ °C | Scheme A | Scheme B | Scheme C | Scheme D |
|---|---|---|---|---|
| T max | 73.7 | 63.3 | 61.8 | 62.6 |
| T min | 65.3 | 62.1 | 61.2 | 61.6 |
| ΔT | 8.4 | 1.2 | 0.6 | 1.0 |

FIG. 4

| SOC | Scheme A | Scheme B | Scheme C | Scheme D |
|---|---|---|---|---|
| SOC max | 0.5144 | 0.5050 | 0.5035 | 0.5030 |
| SOC min | 0.4876 | 0.4877 | 0.4878 | 0.4886 |
| ΔSOC | 0.0268 | 0.0173 | 0.0157 | 0.0144 |

FIG. 5

Obtaining module ⟋301

Simulation module ⟋302

Determination module ⟋303

FIG. 6

Obtaining module — 301

Simulation module — 302          Generation module — 304

Determination module — 303          Correction module — 305

FIG. 7

Processor — 402

coupled

Memory — 401

FIG. 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 595 840 A (UNIV SCIENCE & TECHNOLOGY CHINA) 28 September 2018 (2018-09-28) * abstract * * [0009], [0022], [0038]-[0041], [0070], [0071], [0162], [0167], [0170]-[0174]; claims 1, 4, 9 * | 1-15 | INV. G06F30/17 G06F30/20 ADD. G06F119/08 |
| A | STURM J ET AL: "Modeling and simulation of inhomogeneities in a 18650 nickel-rich, silicon-graphite lithium-ion cell during fast charging", JOURNAL OF POWER SOURCES, vol. 412, 1 February 2019 (2019-02-01), pages 204-223, XP085577407, ISSN: 0378-7753, DOI: 10.1016/J.JPOWSOUR.2018.11.043 * abstract * * pg. 208, 215, 216; figures 7, 8; tables 4, 7, A.12 * | 1-15 | |
| A | CN 108 062 429 A (SHANXI CHANGZHENG POWER TECH CO LTD) 22 May 2018 (2018-05-22) * [0006], [0054], [0128], [0130] * | 1-15 | TECHNICAL FIELDS SEARCHED (IPC) G06F |

-/--

The present search report has been drawn up for all claims

| Place of search | Date of completion of the search | Examiner |
|---|---|---|
| Munich | 14 November 2024 | Brandiska, Pavlina |

EPO FORM 1503 03.82 (P04C01)

page 1 of 2

| | Europäisches Patentamt<br>European Patent Office<br>Office européen des brevets | **EUROPEAN SEARCH REPORT** | **Application Number**<br>EP 24 18 7592 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAMBA AHMADOU ET AL: "Impact of Tab Location on Large Format Lithium-Ion Pouch Cell Based on Fully Coupled Tree-Dimensional Electrochemical-Thermal Modeling", ELECTROCHIMICA ACTA, ELSEVIER, AMSTERDAM, NL, vol. 147, 30 September 2014 (2014-09-30), pages 319-329, XP029096046, ISSN: 0013-4686, DOI: 10.1016/J.ELECTACTA.2014.08.115 * abstract * * section 1, last paragraph pg. 328; figures 4, 20; table 5 * ----- | 1-15 | |
| | | | **TECHNICAL FIELDS SEARCHED** (IPC) |

The present search report has been drawn up for all claims

| Place of search | Date of completion of the search | Examiner |
|---|---|---|
| Munich | 14 November 2024 | Brandiska, Pavlina |

EPO FORM 1503 03.82 (P04C01)

page 2 of 2

## ANNEX TO THE EUROPEAN SEARCH REPORT
## ON EUROPEAN PATENT APPLICATION NO.

EP 24 18 7592

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | Publication date | Patent family member(s) | Publication date |
|---|---|---|---|
| CN 108595840 A | 28-09-2018 | NONE | |
| CN 108062429 A | 22-05-2018 | NONE | |

EPO FORM P0459

For more details about this annex : see Official Journal of the European Patent Office, No. 12/82